# EUROPEAN PATENT SPECIFICATION

(11) **EP 4 052 873 B1**
(45) Date of publication and mention of the grant of the patent: **16.08.2023**
(21) Application number: 22155012.2
(22) Date of filing: 03.02.2022
(51) Int. Cl.: B26D 11/00, C03B 37/01, C03B 37/16, D01G 1/04

(54) **HIGH FLEXIBILITY CUTTING PLANT FOR GLASS FIBER**
HOCHFLEXIBLE SCHNEIDANLAGE FÜR GLASFASER
INSTALLATION DE DÉCOUPE DE FIBRE DE VERRE À HAUTE FLEXIBILITÉ

(30) Priority: 09.02.2021 IT 202100002840
(43) Date of publication of application: 07.09.2022
(73) Proprietor: Mercurio S.r.l., 20124 Milano (IT)
(72) Inventor: FABBRIS, Alberto, Verbania (VB) (IT); COLOMBO, Andrea, Costamasnaga (LC) (IT); MOUNIER, Marc, Le Touvet (FR)
(74) Representative: Rastelli, Franco

(56) References cited:
- US-A- 4 194 896
- US-A- 4 551 160
- US-A- 5 935 289

## Description

### BACKGROUND OF THE INVENTION

The present invention relates to a glass fiber cutting plant.

The present invention relates in particular to the production of glass fibers for reinforcement.

Glass raw materials are fed into a melting furnace in a continuous process (8760 hours/year for about 10/12 years - the furnace life time). The glass is heated up to about 1500°C and, being then in the liquid state, flows from the melting basin towards the furnace foreparts. In these foreparts, the molten glass is fiber-ized using platinum/rhodium dies to form the glass fiber.

The present invention refers to a new production system for direct cutting of the fiber by means of a plant which ensures the correct fiberizing speed for the glass wire and cuts it directly to the desired length.

In the production lines according to the prior art, the glass fiber is cut starting from several dies at the same time, with several grouped wires that are first brought to a single cutter and subsequently to the granulation, drying, screening and packaging line.

The above described conventional system has advantages linked to economies of scale and high productivity, however it also has important drawbacks, first and foremost, the need to produce large quantities of the same product.

The above described system entails a lack of flexibility and also does not allow the system to respond quickly to fluctuations in market demand.

US4551160A discloses a method and apparatus for forming glass filaments wherein a transfer guide means is movable between a strand thread up position and a transfer zone immediately adjacent the primary attenuation means. The transfer guide moves a strand about to be restarted which is being advanced by a secondary attenuation means into contact with the primary attenuation means, to be advanced thereby, and to release such strand when the transfer guide is at a predetermined zone, permitting to transfer the strand, advanced by the secondary attenuation means, to the primary attenuation means, without reducing the speed of the primary attenuation means.

US5935289A discloses an apparatus, for automatic fiber manufacture, having many fiberizers each forming as many as several thousand fibers. The apparatus provides for getting the fiberizers ready to restart quickly, when the fibers break, and for forming a fiber strand. The apparatus also provides for gripping the strand, breaking it and transporting it to strand pulling and processing equipment and for moving a newly started strand into a desired position on an optional strand separating and guiding means.

US4194896A discloses a method and an apparatus, for forming glass filaments, having a plurality of spaced apart forming sections wherein each section is comprised of a feeder supplying a plurality of streams of glass to be attenuated into continuous filaments. A zone is defined by the paths of the free-falling streams and an applicator, laterally spaced from such zone, applies a coating to the advancing filaments. A first guide gathers the filaments into a strand. The guide and the applicator are positioned such that the coating is applied to the filaments at a region external to the zone and intermediate the feeder and the first guide, along the path of advancement of the filaments. A secondary attenuation means advances the filaments as waste and a single primary attenuation means simultaneously attenuates the streams from each section into filaments. A second guide is positioned to advance the strands from each section external to all of the zones when the strands are being advanced by the primary attenuation means. The feeders, applicator, first guide and second guide are positioned such that any of the strands are advanced along paths external to all of the zones and in the absence of contact with any other of the strands when any of the waste strands are advanced by the secondary attenuation means.

### SUMMARY OF THE INVENTION

The aim of the present invention is to create a glass fiber cutting plant that overcomes the drawbacks of the prior art systems cited above.

In connection with this aim, a particular object of the invention is to provide a plant that allows to reach high production flexibility.

A further object of the invention is to provide a plant that allows the simultaneous production of different products.

A particular object of the invention is to provide a plant that allows product diversification to be maximized so as to be able to effectively respond to market demand variations.

A further object of the invention is to provide a plant capable of supplying different types of products at the same time, ensuring great flexibility.

A further object of the invention is to provide a plant that offers lower production change costs, for like productivity levels, thus reducing all the losses associated with production changeovers.

A further object of the present invention is to provide a plant that, due to its particular constructional characteristics, is capable of ensuring the most extensive guarantees of reliability and safety in use.

These and other objects, which will appear more clearly in the following, are achieved by a glass fiber cutting plant, characterized in that it comprises a plurality of production lines, and a matrix system, having a plurality of cutters, each of said cutters corresponding to a specific die and being movable from one of said production lines to another.

### BRIEF DESCRIPTION OF THE DRAWINGS

Further characteristics and advantages of the present invention will be more apparent from an examination of the description of a preferred, but not exclusive, embodiment of the invention, illustrated by way of non-limiting example in the appended drawings, in which:

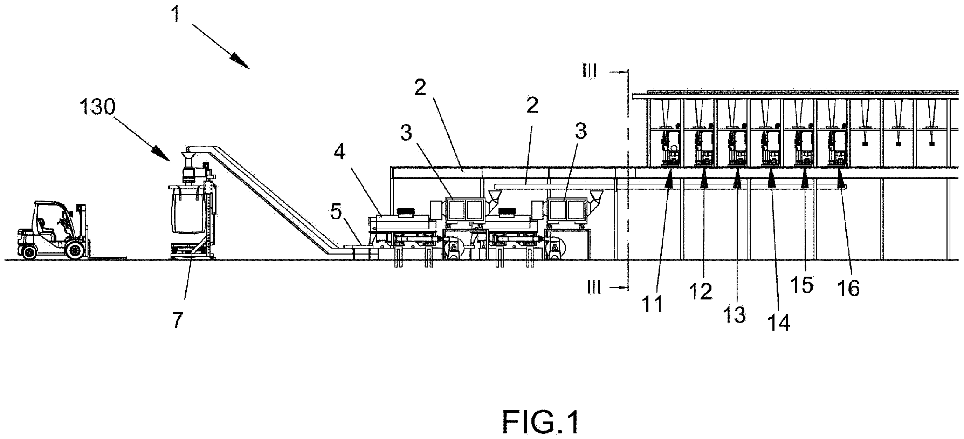

Figure 1 is a side view of the plant according to the present invention;

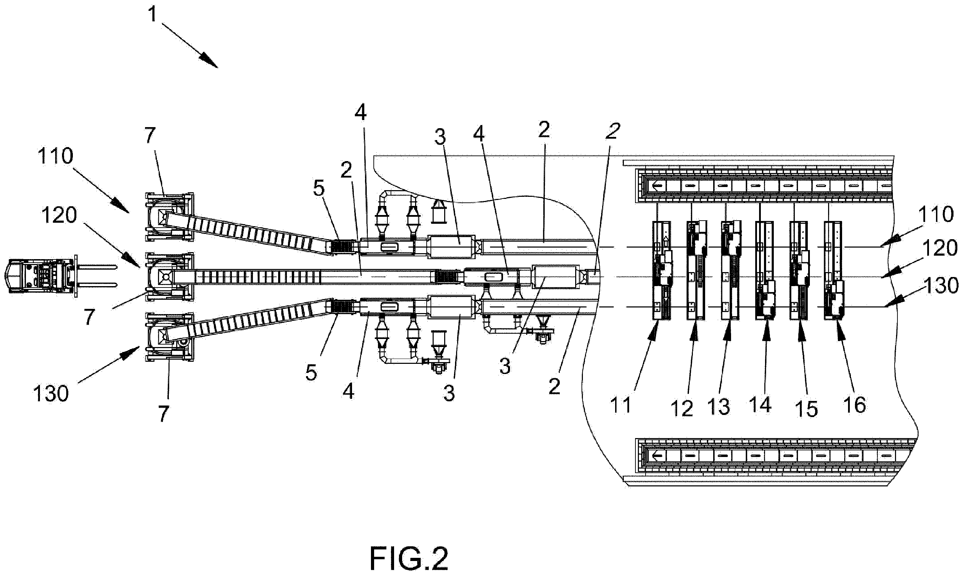

Figure 2 is a plan view of the plant;

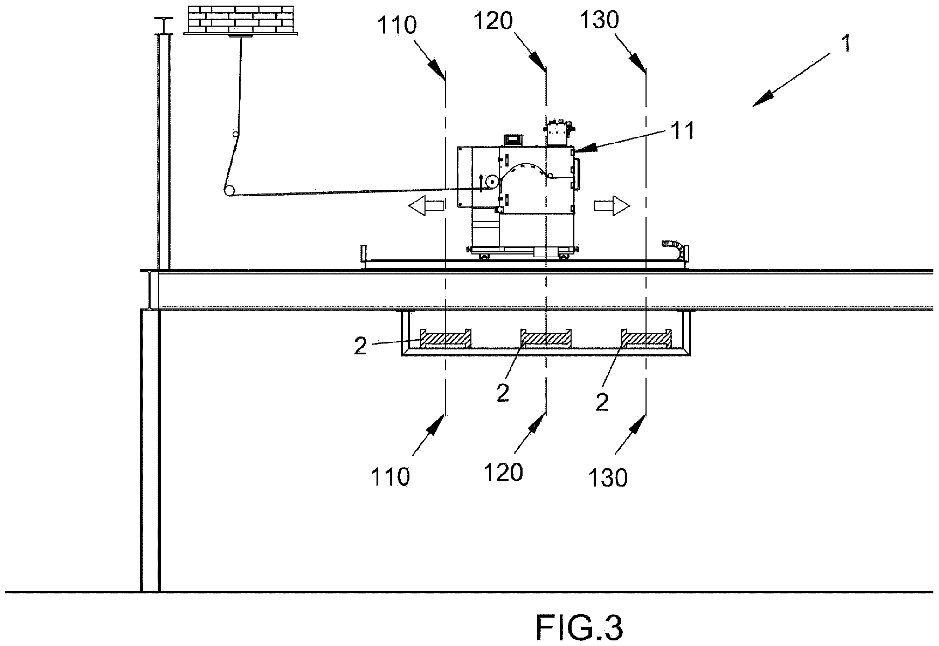

Figure 3 is a sectional view, along the section plane III-III of Figure 1;

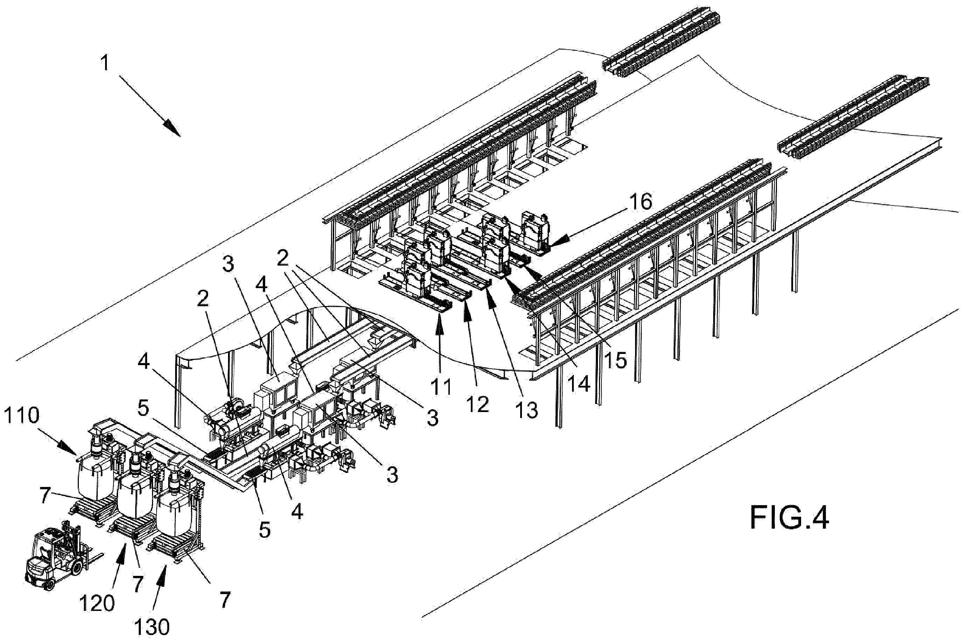

Figure 4 is a perspective view of the plant according to the present invention.

### DESCRIPTION OF THE PREFERRED EMBODIMENTS

With particular reference to the numerical symbols of the aforementioned figures, the plant according to the invention, indicated as a whole with the reference number 1, comprises a plurality of production lines, indicated with the reference numbers 110, 120, 130, and a matrix system, consisting of a plurality of cutters, indicated with the reference numbers 11, 12, 13, 14, 15, 16, each of which corresponds to a specific die and can be moved from one production line to another.

The axis of displacement of the cutters is orthogonal to the axis of the production lines, which are located on a plane below the fiberizing plane, where the dies with relative cutter are positioned.

According to an embodiment of the invention, each production line comprises conveyor belts 2, a granulator 3, a drying oven 4, a vibrating screen 5, a system for detecting metallic components and waste, and a packaging device 7.

In the embodiment proposed here, each single production line, 110, 120, 130, is capable of managing up to three cutters, and therefore three dies, at the same time.

The plant 1, described here by way of example, represents the application of the invention on six dies for the production of three different products A, B, and C.

Products A, B, and C can differ from each other in, for example: micronage, length of cut, binder chemistry.

As illustrated in the figures, each of the products has its own production line consisting of dedicated equipment.

The three lines, 110, 120, 130, comprise similar components, therefore it is possible, for instance, to produce three similar products A, B, and C, if necessary, to reach a condition similar to the already known condition in which there is no product differentiation.

The condition shown in the embodiment described here is the following:
cutter 11 on production line 120 (product B)
cutter 12 on production line 110 (product A)
cutter 13 on production line 110 (product A)
cutter 14 on production line 130 (product C)
cutter 15 on production line 120 (product B)
cutter 16 on production line 130 (product C)

Should it be necessary to increase the production of a specific product, the system's flexibility allows to move a cutter on to the relevant line.

For example, in the event of an increase in demand for product C, the cutter 15 can be moved into position on line 130.

It has been seen in practice that this invention achieves the intended aim and objects.

In fact, the plant according to the invention has considerable advantages over the plants of the prior art.

Compared to the prior art systems, in fact the present invention can manage the production in a capillary manner.

By way of example, assuming there are two production lines relating to two products A and B, it is possible to position the cutters 11 and 12 on the line 110 while the cutters 13 and 14 are positioned on the line 120.

Following a production request, the system allows to quickly move the cutter 12, (for example), from line 110 to line 120.

In this way, the production batches are considerably reduced, simultaneously reducing the risk of losing the order due to lack of the specific product required by the market, while also reducing the need to build up stock.

It must in fact be borne in mind that glass fiber products are products that generally have an expiry date, a fact that increases the economic risk of building up stock.

The prior art systems require many production changes in order to closely follow the customer's request.

On the contrary, with the plant according to the present invention, equipped with individual cutters, it is possible to produce different types of products at the same time, introducing greater flexibility.

The present invention allows to lower the production changeover costs for a like level of productivity, thus reducing all the losses associated with production changeover.

The materials used, as well as the dimensions, may be adapted to meet any needs.

## Claims

1. A glass fiber cutting plant, **characterized in that** it comprises a plurality of production lines (110, 120, 130), and a matrix system, having a plurality of cutters (11, 12, 13, 14, 15, 16); each of said cutters corresponding to a specific die and being movable from one of said production lines to another.

2. The plant according to claim 1, **characterized in that** each of said cutters (11, 12, 13, 14, 15, 16) has a displacement axis; said displacement axis being orthogonal to the axis of said production lines (110, 120, 130), said production lines (110, 120, 130) being arranged in a plane below the fiberizing plane, where the dies with relative cutter are positioned.

3. The plant according to claim 1, **characterized in that** each of said production lines (110, 120, 130) comprises conveyor belts (2).

4. The plant according to claim 1, **characterized in that** each of said production lines (110, 120, 130) comprises a granulator (3).

5. The plant according to claim 1, **characterized in that** each of said production lines (110, 120, 130) comprises a drying oven (4).

6. The plant according to claim 1, **characterized in that** each of said production lines (110, 120, 130) comprises a vibrating screen (5).

7. The plant according to claim 1, **characterized in that** each of said production lines (110, 120, 130) comprises a system for detecting metallic components and waste.

8. The plant according to claim 1, **characterized in that** each of said production lines (110, 120, 130) comprises a packaging device (7).

9. The plant, according to claim 1, **characterized in that** each of said production lines (110, 120, 130) manages up to three cutters (11, 12, 13, 14, 15, 16) and three dies at the same time.

## Patentansprüche

1. Schneidanlage für Glasfaser, **dadurch gekennzeichnet, dass** sie mehrere Fertigungslinien (110, 120, 130) und ein Matrixsystem mit mehreren Schneidgeräten (11, 12, 13, 14, 15, 16) umfasst; wobei jedes der Schneidgeräte einem bestimmten Zieheisen zugeordnet ist und von einer der Fertigungslinien zu einer anderen bewegbar ist.

2. Anlage nach Anspruch 1, **dadurch gekennzeichnet, dass** jedes der Schneidgeräte (11, 12, 13, 14, 15, 16) eine Verschiebeachse aufweist; wobei die Verschiebeachse orthogonal zu der Achse der Fertigungslinien (110, 120, 130) verläuft, wobei die Fertigungslinien (110, 120, 130) in einer Ebene unterhalb der Faserbildungsebene angeordnet sind, in der die Zieheisen mit dem jeweiligen Schneidgerät positioniert sind.

3. Anlage nach Anspruch 1, **dadurch gekennzeichnet, dass** jede der Fertigungslinien (110, 120, 130) Förderbänder (2) umfasst.

4. Anlage nach Anspruch 1, **dadurch gekennzeichnet, dass** jede der Fertigungslinien (110, 120, 130) einen Granulator (3) umfasst.

5. Anlage nach Anspruch 1, **dadurch gekennzeichnet, dass** jede der Fertigungslinien (110, 120, 130) einen Trockenofen (4) umfasst.

6. Anlage nach Anspruch 1, **dadurch gekennzeichnet, dass** jede der Fertigungslinien (110, 120, 130) ein Vibrationssieb (5) umfasst.

7. Anlage nach Anspruch 1, **dadurch gekennzeichnet, dass** jede der Fertigungslinien (110, 120, 130) ein System zum Erfassen von Metallkomponenten und Abfall umfasst.

8. Anlage nach Anspruch 1, **dadurch gekennzeichnet, dass** jede der Fertigungslinien (110, 120, 130) eine Verpackungseinrichtung (7) umfasst.

9. Anlage nach Anspruch 1, **dadurch gekennzeichnet, dass** jede der Fertigungslinien (110, 120, 130) bis zu drei Schneidgeräte (11, 12, 13, 14, 15, 16) und drei Zieheisen gleichzeitig verwaltet.

## Revendications

1. Installation de découpe de fibres de verre, **caractérisée en ce qu'**elle comprend une pluralité de lignes de production (110, 120, 130), et un système de matriciel doté d'une pluralité de coupeurs (11, 12, 13, 14, 15, 16); chacun desdits coupeurs correspondant à une filière spécifique et étant mobile de l'une desdites lignes de production à une autre.

2. Installation selon la revendication 1, **caractérisée en ce que** chacun desdits coupeurs (11, 12, 13, 14, 15, 16) comporte un axe de déplacement; ledit axe de déplacement étant orthogonal à l'axe desdites lignes de production (110, 120, 130), lesdites lignes de production (110, 120, 130) étant disposées dans un plan au-dessous du plan de fibérisation, où les filières avec relatif coupeur sont positionnées.

3. Installation selon la revendication 1, **caractérisée en ce que** chacune desdites lignes de production (110, 120, 130) comprend des bandes transporteuses (2).

4. Installation selon la revendication 1, **caractérisée en ce que** chacune desdites lignes de production (110, 120, 130) comprend un granulateur (3).

5. Installation selon la revendication 1, **caractérisée en ce que** chacune desdites lignes de production (110, 120, 130) comprend un four de séchage (4).

6. Installation selon la revendication 1, **caractérisée en ce que** chacune desdites lignes de production (110, 120, 130) comprend un crible vibrant (5).

7. Installation selon la revendication 1, **caractérisée en ce que** chacune desdites lignes de production (110, 120, 130) comprend un système de détection de composants métalliques et de déchets.

8. Installation selon la revendication 1, **caractérisée en ce que** chacune desdites lignes de production (110, 120, 130) comprend un dispositif d'emballage (7).

9. Installation selon la revendication 1, **caractérisée en ce que** chacune desdites lignes de production (110, 120, 130) gère jusqu'à trois coupeurs (11, 12, 13, 14, 15, 16) et trois filières en même temps.
